# EUROPEAN PATENT APPLICATION

(11) **EP 4 287 671 A1**
(43) Date of publication of application: **06.12.2023**
(21) Application number: 22188451.3
(22) Date of filing: 03.08.2022
(51) Int. Cl.: H04W 4/90, H04W 4/021, G01W 1/02

(54) **DISASTER WARNING SYSTEM WITH ACTIVE GEOFENCING**

(30) Priority: 31.05.2022 KR 20220067222
(71) Applicant: Kitvalley Co., Ltd., Seoul (KR)
(72) Inventor: CHO, Beom Jun, Goyang-si (KR); KIM, Yong Yook, Seoul (KR); KIM, Hyun Chul, Seoul (KR); YOO, Han A Reum, Seoul (KR); JUNG, Yun Sik, Seoul (KR)
(74) Representative: Grünecker Patent- und Rechtsanwälte PartG mbB

(57) **Abstract**

Provided is a disaster warning system with active geofencing, which includes: an information collection unit for collecting real-time disaster information, real-time weather information and document information on existing disasters; a geofencing analysis unit for complexly analyzing the information to classify the scope of an area that causes a disaster damage after the disaster into caution and danger zones on a map based on geofencing, disaster situations and time series; an information generation unit for generating content for indicating the caution and danger zones on the map; and an information notification unit that provides the received content to a user mobile phone in a section set by a disaster damage prediction range, to allow the user mobile phone to indicate the caution and danger zones on the map.

## Description

### BACKGROUND OF THE INVENTION

### 1. Field of the Invention

The present invention relates to a disaster warning system with active geofencing.

### 2. Description of the Related Art

Geofencing refers to a location-based service that notifies a user access status to a specific area.

Disasters are difficult to prevent because of their unexpected occurrences. In particular, when the air is dry, small fires often spread to large wildfires, and large or small fires occur frequently in the city. Examples of disasters include fires, wildfires, floods, infectious diseases, and hazardous chemical leakages.

When the above disaster occurs, it is very important to notify the people in a section set in consideration of a disaster damage prediction area that a disaster has occurred, such that the people in the section set as the disaster damage prediction area may quickly respond to the disaster.

Accordingly, it is necessary that, upon a disaster, the scope of an area that may cause a disaster damage after the disaster is classified into a caution zone and a danger zone on a map based on active geofencing, disaster situations and time series, and information about the caution zone and the danger zone on the map is provided to users' mobile phones and mass media in the section set by the disaster damage prediction range, so as to enable users in the section set by the disaster damage prediction range to quickly and effectively respond to the disaster.

Related art document: Korean Unexamined Patent Publication No. 10-2020-0038894 (Published on April 14, 2020) entitled by "INFORMATION DELIVERY SYSTEM USING GEOFENCE DATA"

The "INFORMATION DELIVERY SYSTEM USING GEOFENCE DATA" according to the above related art document accurately determines whether a mobile device containing location information is located in the corresponding area, so as to provide information about the mobile device located within the area even in a complex geofence area.

However, the "INFORMATION DELIVERY SYSTEM USING GEOFENCE DATA" according to the above related art document cannot provide that, upon a disaster, the scope of an area that may cause a disaster damage after the disaster is classified into a caution zone and a danger zone on a map based on active geofencing, disaster situations and time series, and information about the caution zone and the danger zone on the map is provided to users' mobile phones and mass media in the section set by the disaster damage prediction range.

### SUMMARY OF THE INVENTION

In order to solve the above-described problems, the present invention provides a disaster warning system with active geofencing, such that, upon a disaster, the scope of an area that may cause a disaster damage after the disaster is classified into a caution zone and a danger zone on a map based on active geofencing, disaster situations and time series, and information about the caution zone and the danger zone on the map is provided to users' mobile phones and mass media in the section set by the disaster damage prediction range.

An aspect of the present invention in order to achieve the above-mentioned object, the disaster warning system with active geofencing includes:
an information collection unit (10) for collecting real-time disaster information, real-time weather information including wind direction, wind speed and humidity, and document information on existing disasters including extent of damage for each existing disaster situation;
a geofencing analysis unit (40) for complexly analyzing the disaster information, the weather information and the document information collected and provided from the information collection unit (10) to classify, upon a disaster, the scope of an area that may cause a disaster damage after the disaster into a caution zone and a danger zone on a map based on geofencing, disaster situations and time series;
an information generation unit (50) for generating content for indicating the caution zone and the danger zone on the map based on the classification into the caution zone and the danger zone on the map by the analysis of the geofencing analysis unit (40); and
an information notification unit (60) that receives the content for indicating the caution zone and the danger zone on the map provided from the information generating unit (50), and provides the received content to a user mobile phone (70) in a section set by a disaster damage prediction range, to allow the user mobile phone (70) to indicate the caution zone and the danger zone on the map, so as to allow a user to see the caution zone and the danger zone on the map.

The information notification unit (60) may receive the content for indicating the caution zone and the danger zone on the map provided from the information generating unit (50), and provide the received content to mass media (80) in the section set by the disaster damage prediction range, to allow the mass media (80) to indicate the caution zone and the danger zone on the map, so as to enable the public to see the caution zone and the danger zone on the map.

The disaster warning system further includes a database (30) that stores and manages the disaster information, the weather information and the document information collected by the information collection unit (10), accesses the geofencing analysis unit (40) and the information generation unit (50), and stores and manages an operation history of the information notification unit (60).

According to the present invention, upon a disaster, the scope of an area that may cause a disaster damage after the disaster is classified into a caution zone and a danger zone on a map based on active geofencing, disaster situations and time series, and information about the caution zone and the danger zone on the map is provided to users' mobile phones and mass media in the section set by the disaster damage prediction range, so that users in the section set by the disaster damage prediction range can quickly and effectively respond to the disaster.

### BRIEF DESCRIPTION OF THE DRAWINGS

FIG. 1 is a block diagram showing one embodiment of a disaster warning system with active geofencing according to the present invention.
FIG. 2 is a view showing an example of a disaster warning service provided by the disaster warning system with active geofencing FIG. 1.

### DETAILED DESCRIPTION OF THE INVENTION

Hereinafter, the embodiments of the present invention will be described in detail with reference to the accompanying drawings.

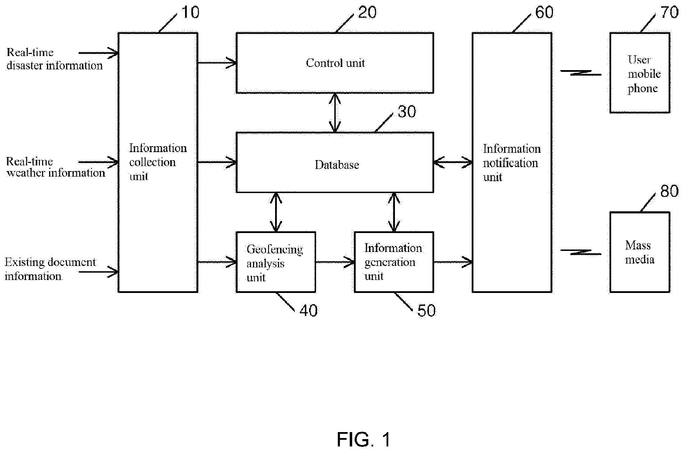

FIG. 1 is a block diagram showing one embodiment of a disaster warning system with active geofencing according to the present invention, and includes an information collection unit 10, a control unit 20, a database 30, a geofencing analysis unit 40, an information generation unit 50, an information notification unit 60, a user mobile phone 70 and mass media 80.

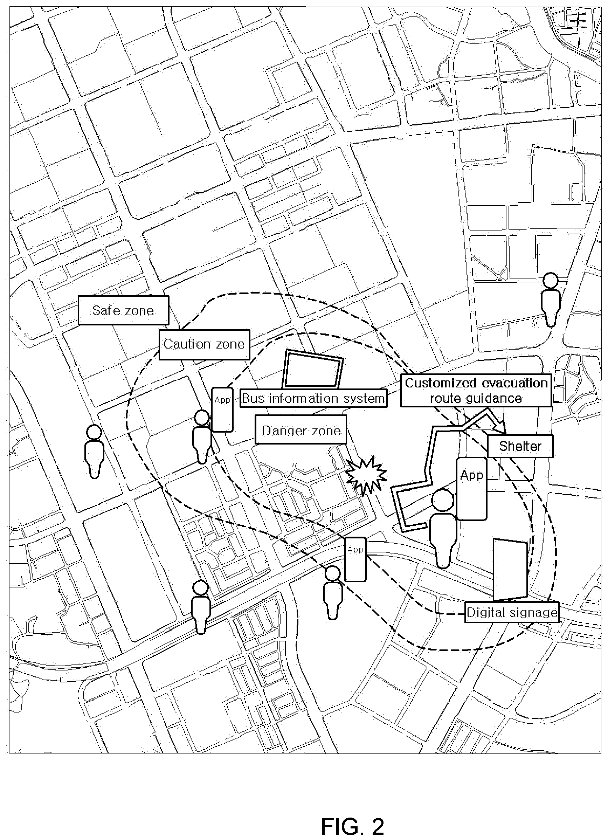

The present invention in the above manner will be described in detail with reference to FIG. 2 as follows.

FIG. 2 is a view showing an example of a disaster warning service provided by the disaster warning system with active geofencing FIG. 1.

In FIGS. 1 to 2, the information collection unit 10 collects real-time disaster information, real-time weather information including wind direction, wind speed and humidity, and document information on existing disasters including extent of damage for each existing disaster situation to provide the collected information to the control unit 20, the database 30, and the geofencing analysis unit 40. The disaster information, the weather information, and the document information may be provided through the Internet and the like from each government-run institution.

The geofencing analysis unit 40 complexly analyzes the disaster information, the weather information and the document information collected and provided from the information collection unit 10 to classify, upon a disaster, the scope of an area that may cause a disaster damage after the disaster into a caution zone and a danger zone on a map based on geofencing, disaster situations and time series.

The information generation unit 50, as shown in FIG. 2, generates content for indicating the caution zone and the danger zone on the map based on the classification into the caution zone and the danger zone on the map by the analysis of the geofencing analysis unit 40.

The information notification unit 60 receives the content for indicating the caution zone and the danger zone on the map provided from the information generating unit 50, and provides the received content to a user mobile phone 70 in a section set by a disaster damage prediction range, to allow the user mobile phone 70 to indicate the caution zone and the danger zone on the map, so that the user is allowed to see the caution zone and the danger zone on the map.

In addition, the information notification unit 60 receives the content for indicating the caution zone and the danger zone on the map provided from the information generating unit 50, and provides the received content to mass media 80 in the section set by the disaster damage prediction range, to allow the mass media 80 to indicate the caution zone and the danger zone on the map, so that the public is allowed to see the caution zone and the danger zone on the map. The mass media 80 includes a digital signage, bus information system and the like. The information notification unit 60 may communicate with the mass media 80 through a wireless, wired, or wireless and wired information communication network.

The database 30 stores and manages the disaster information, the weather information and the document information collected by the information collection unit 10, accesses the geofencing analysis unit 40 and the information generation unit 50, and stores and manages an operation history of the information notification unit 60.

The control unit 20 is connected to the information collection unit 10 and the database 30 to monitor, manage and control the disaster situation.

According to the present invention as described above, upon a disaster, the scope of an area that may cause a disaster damage after the disaster is classified into a caution zone and a danger zone on a map based on active geofencing, disaster situations and time series, and information about the caution zone and the danger zone on the map is provided to users' mobile phones and mass media in the section set by the disaster damage prediction range, so that users in the section set by the disaster damage prediction range can quickly and effectively respond to the disaster.

The technical idea of the present invention has been described above with the accompanying drawings. However, the above description is provided merely as an exemplary embodiment of the present invention, and does not limit the present invention. Further, it will be apparent that a person having ordinary skill in the art may carry out various deformations and modifications within the scope of the technical idea of the present invention.

## Claims

1. A disaster warning system with active geofencing, the disaster warning system comprising:
an information collection unit (10) for collecting real-time disaster information, real-time weather information including wind direction, wind speed and humidity, and document information on existing disasters including extent of damage for each existing disaster situation;
a geofencing analysis unit (40) for complexly analyzing the disaster information, the weather information and the document information collected and provided from the information collection unit (10) to classify, upon a disaster, a scope of an area that causes a disaster damage after the disaster into a caution zone and a danger zone on a map based on geofencing, disaster situations and time series;
an information generation unit (50) for generating content for indicating the caution zone and the danger zone on the map based on the classification into the caution zone and the danger zone on the map by the analysis of the geofencing analysis unit (40); and
an information notification unit (60) that receives the content for indicating the caution zone and the danger zone on the map provided from the information generating unit (50), and provides the received content to a user mobile phone (70) in a section set by a disaster damage prediction range, to allow the user mobile phone (70) to indicate the caution zone and the danger zone on the map, so as to allow a user to see the caution zone and the danger zone on the map.

2. The disaster warning system of claim 1, wherein the information notification unit (60) receives the content for indicating the caution zone and the danger zone on the map provided from the information generating unit (50), and provides the received content to mass media (80) in the section set by the disaster damage prediction range, to allow the mass media (80) to indicate the caution zone and the danger zone on the map, so as to enable the public to see the caution zone and the danger zone on the map.

3. The disaster warning system of claim 1 or 2, further comprising:
a database (30) that stores and manages the disaster information, the weather information and the document information collected by the information collection unit 10, accesses the geofencing analysis unit (40) and the information generation unit (50), and stores and manages an operation history of the information notification unit (60).
